# EUROPÄISCHE PATENTSCHRIFT

(11) **EP 0 598 267 B1**
(45) Veröffentlichungstag und Bekanntmachung des Hinweises auf die Patenterteilung: **04.03.1998**
(21) Anmeldenummer: 93117638.2
(22) Anmeldetag: 30.10.1993
(51) Int. Cl.: H04N 5/63

(54) **Videoempfänger mit einem Schaltnetzteil**
Television receiver with a switching power supply
Récepteur de télévision muni d'une alimentation à découpage

(30) Priorität: 07.11.1992 DE 4237634
(43) Veröffentlichungstag der Anmeldung: 25.05.1994
(73) Patentinhaber: NOKIA TECHNOLOGY GmbH, 75175 Pforzheim (DE)
(72) Erfinder: Rosenthal, Hans-Dietrich, D-33803 Steinhagen (DE)

(56) Entgegenhaltungen:
- EP-A- 0 167 737
- EP-A- 0 436 515
- EP-A- 0 477 399
- ELECTOR ELECTRONICS Bd. 13, Nr. 149 , Oktober 1987 , LONDON (GB) Seiten 49 - 53 ANONYMOUS 'SWITCH-MODE POWER SUPPLIES'

## Beschreibung

Die Erfindung betrifft einen Videoempfänger mit einem an die Stromversorgungseingänge des Empfängers angeschlossenen Schaltnetzteil gemäß dem Oberbegriff des Anspruches 1.

Es ist bekannt, Fernsehempfänger und ähnliche Geräte mit einem Schaltnetzteil, das im allgemeinen mit der Zeilenfrequenz getaktet wird, auszustatten und mittels einer Fernbedienung in einen leistungsarmen Wartebetrieb (Stand-by) zu schalten, anstelle sie vollständig abzuschalten. Dadurch ist es möglich, das Gerät wieder bequem mittels eines Fernbediengebers in den Betriebszustand zu schalten.

Darüber hinaus ist aus der deutschen Patentschrift DE-C2 33 43 031 ein Videoempfänger bekannt, bei dem das Schaltnetzteil während des Wartebetriebes stromlos geschaltet ist. Der Fernbedienempfänger des Gerätes erhält deshalb seine Betriebsspannung von einem zusätzlichen Bereitschaftsnetzteil, das vom Schaltnetzteil des Gerätes unabhängig ist und einen Netztransformator enthält, der den Fernbedienempfänger vom Energienetz trennt.
Der Fernbedienempfänger, der empfangene Fernbediensignale in Steuerbefehle umsetzt, liefert beim Eintreffen eines Signals zum Einschalten des Videoempfängers an eine Reglersteuerschaltung den erforderlichen Betriebsstrom aus dem Bereitschaftsnetzteil und ein Steuersignal. Diese Reglersteuerschaltung aktiviert das Schaltnetzteil mit einem impulsförmigen Steuersignals.
Da das Bereitschaftsnetzteil während des Wartebetriebes ständig unter Betriebsspannung steht, tritt ein beachtlicher Leistungsbedarf auf. Es ist wünschenswert, diesen zu reduzieren.

Darüber hinaus wird bei dieser bekannten Lösung der Leistungsbedarf im Betriebszustand des Videoempfängers noch dadurch zusätzlich erhöht, daß parallel zur Primärwicklung des Transformators vom Schaltnetzteil über einen ohmschen Vorwiderstand die Erregerwicklung eines Relais zum Anschalten der Entmagnetsiervorrichtung betrieben wird.

Desweiteren ist aus der Druckschrift DE-C2 34 18 076 ein fernbedienbares Fernsehgerät ohne einem Netztransformator im Bereitschaftsnetzteil bekannt. Bei diesem Gerät werden die Betriebsspannung für den Fernbedienempfänger vom Netzteilgleichrichter, welcher mit dem Leistungsnetz galvanisch verbunden ist, und die Betriebsspannungen für die übrigen Teile der Schaltung des Videoempfängers vom Zeilentransformator der Horizontalablenkschaltung abgegriffen.

Die Entmagnetisierschaltung ist über einen bipolaren elektronischen Schalter (Triac) anschaltbar. Sowohl der elektronische Schalter der Entmagnetisierschaltung als auch der Schalttransistor für Zeilentransformatorschaltung werden von zeilenfrequenten Steuerimpulsen, die über einen Impulsübertrager zugeführt werden, leitend geschaltet.

Auch diese Schaltung hat den Nachteil, daß sie relativ viel Energie benötigt, da der Horizontaloszillator und der Fernsteuerempfänger mit dem Decoder im Wartebetrieb ständig über nicht näher ausgeführte Mittel zum Reduzieren der Betriebsspannung mit der gleichgerichteten hohen Netzspannung verbunden sind.

Durch diese Schaltung ergibt sich somit auch keine Reduzierung der Leistung im Wartebetrieb, sondern lediglich eine Einsparung von teuren Bauelementen. Der Erfindung liegt die Aufgabe zugrunde einen Videoempfänger, bei dem zum Verringern der Leistungsaufnahme im Wartebetrieb die Entmagnetisiereinrichtung und das Netzteil stromlos geschaltet sind, mit einem Minimum an Netzstrom, der während des Wartebetriebs aufgenommen wird, in den Betriebszustand zu schalten.
Diese Aufgabe wird mit den in Anspruch 1 angegebenen Merkmalen vorteilhaft gelöst, wobei der Oberbegriff auf EP-A-0 436 515 basiert.

Durch die erfindungsgemäßen Maßnahmen nimmt ein Videoempfänger im Wartebetrieb nur noch eine Verlustleistung in der Größenordnung von 1/10 Watt auf. Die Leistungsreduktion wird zum einen dadurch erreicht, daß ein Empfängerdekoder zum Erkennen der Fernbediensignale zum Umschalten zwischen Betriebszustand und Wartebetrieb des Videoempfängers auf der netzverbundenen Primärseite des Schaltnetzteiles angeordnet ist und aus einem vom Schaltnetzteil unabhängigen transformatorlosen Netzteil mit geringen Wirkverlusten mit Betriebsstrom versorgt wird. Das Schaltnetzteil wird in bekannter Weise, während des Wartebetriebes des Videoempfängers vollständig stromlos geschaltet. Das Einschalten des Schaltnetzteiles zum Betrieb des Videoempfängers mit der Fernbedienung erfolgt dadurch, daß der Impulsgenerator für den Schalttransistor des Schaltnetzteiles aus dem Bereitschaftsnetzteil den ersten Betriebsstrom erhält, bis das Schaltnetzteiles die weitere Stromversorgung für den Impulsgenerator übernimmt.

Die andere Maßnahme ist die, daß die Entmagnetisiereinrichtung für die Bildröhre des Videoempfängers, die während des Wartebetriebes in bekannter Weise durch einen elektronischen Schalter stromlos geschaltet ist, erfindungsgemäß vom Eingangsstrom, den das Empfangsgerät aus dem Energienetz bezieht, gesteuert wird. Die Entmagnetisiereinrichtung wird somit ausschließlich über den Betriebsstrom des Schaltnetzteiles in Betrieb gesetzt.

Der elektronische Schalter der Entmagnetisiereinrichtung wird jedesmal nur während eines Teiles einer Halbwelle eingeschaltet, so daß die Bildröhre jedesmal nach dem Umschalten vom Wartebetrieb in den Betriebszustand durch abnehmende Stromimpulse entmagnetisiert wird.

Die Unteransprüche kennzeichnen vorteilhafte Ausgestaltungen der Erfindung.

Es ist vorteilhaft, daß das vom Schaltnetzteil unabhängige Bereitschaftsnetzteil, welche eine Gleichrichterschaltung mit einem ausgangsseitigen Speicherkondensator ist, zum Reduzieren der Betriebsspannung für den Fernbediendecoder kapazitiv an die Netzeingänge des Videoempfängers angeschlossen ist. Dieses bewirkt eine Verlustleistung, die gegenüber der Verlustleistung des zu versorgenden Fernbediendecoders vernachlässigbar ist.

Die Erfindung wird nachfolgend anhand vorteilhafter Ausführungsbeispiele näher erläutert.

Die Zeichnungen zeigen:
- Figur 1: ein Blockschaltbild der Stromversorgungen eines Videoempfängers mit Entmagnetisiereinrichtung,
- Figur 2: ein Diagramm zum Verlauf des Stromes in der Entmagnetisiereinrichtung.

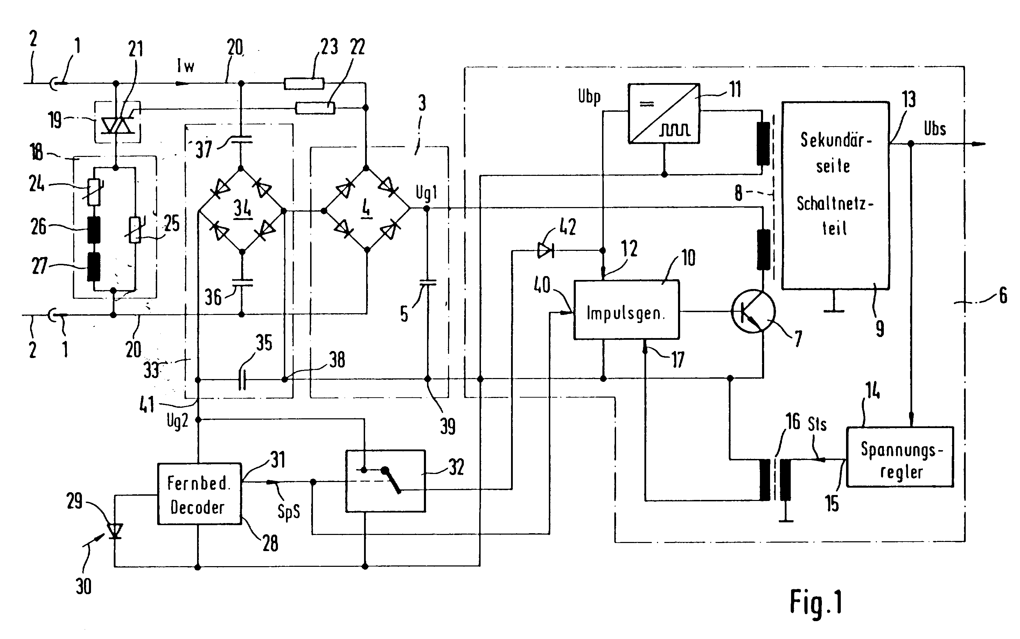

Die Figur 1 zeigt schematisch die Stromversorgung eines Videoempfängers. Dieser ist über Netzeingänge 1 an ein örtliches Energienetz 2 angeschlossen. Ein Gleichrichter 3 richtet den Eingangswechselstrom Iw gleich, der im Beispiel ein Brückengleichrichter 4 mit einem Speicherkondensator 5 ist.

An diesem Gleichrichter 3 ist ein Schaltnetzteil 6 angeschlossen, das die im Speicherkondensator 5 gespeicherte elektrische Energie über einen Schalttransistor 7 und einen Transformator 8 auf die Sekundärseite des Schaltnetzteiles 6 mit der Sekundärschaltung 9 überträgt. Der Schalttransistor 7 wird von einem Impulsgenerator 10 gesteuert, der von einem primärseitigen Stromversorgungsteil 11 des Schaltnetzteiles 6 an einem Betriebsspannungsanschluß 12 gespeist wird.

In der Sekundärschaltung 9 des Schaltnetzteiles 6 werden die Betriebsspannungen zum Versorgen des Videoempfängers erzeugt, die galvanisch vom örtlichen Energienetz getrennt sind. An einem Betriebsspannungsausgang 13 liegt die erzeugte Betriebsspannung Ubs. An diesen Ausgang ist ein Regelerverstärker 14 angeschlossen, der an seinem Stellausgang 15 ein Stellsignal StS erzeugt, das über einen Impulsübertrager 16 zur Netztrennung an einen Eingang 17 des Impulsgenerators 10 übertragen wird. Dieses Stellsignal StS verändert die Impulsbreite der zum Beispiel zeilenfrequenten Impulsfolge des Impulsgenerators 10 entsprechend der sekundärseitigen Betriebsspannung Ubs.

Außerdem enthält der Videoempfänger eine Entmagnetisiereinrichtung 18, die über den elektronischen Schalter 19 unmittelbar an die Netzleitungen 20 angeschlossen ist. Im Beispiel ist der elektronische Schalter 19 ein Triac mit einer Steuerstrecke 21, die über einen Begrenzungswiderstand 22 parallel zu einem in einer Netzleitung 20 angeordneten Widerstand 23 geschaltet ist. Dieser niederohmige Widerstand 23 stellt einerseits den Steuergenerator für die Steuerstrecke 21 des Triac 19 dar und begrenzt andererseits den Spitzenstrom durch die Gleichrichterdioden im Brückengleichrichter 4.

Die Entmagnetisiereinrichtung 18 enthält die Serienschaltung zweier Entmagnetisierspulen 26 und 27 zum Entmagnetisieren der nicht näher dargestellten Bildröhre des Videoempfängers und einen Kaltleiter 24 mit kurzer Aufheizzeit. Parallel zur Reihenschaltung ist ein zweiter Kaltleiter 25 angeordnet, der thermisch mit dem ersten Kaltleiter 24 gekoppelt ist und eine längere Aufheizzeit aufweist. Dadurch wird nach der Aufheizzeit des zweiten Kaltleiters 25 der erste Kaltleiter 24 auf einer Temperatur gehalten, die einen hohen Betriebswiderstand im ersten Kaltleiter 24 einstellt, so daß nahezu kein Strom mehr durch die Entmagnetisierspulen 26 und 27 fließt.

Ferner enthält der Videoempfänger einen Empfangsdecoder 28 mit einem Empfangselement 29, beispielsweise einen Infrarotempfänger zum Empfang von Fernbediensignalen 30, die ein nicht näher dargestellter Fernbediengeber aussendet. Der Empfangsdecoder 28 erzeugt während des Wartebetriebes am Ausgang 31 ein Steuersignal SpS, das den Schalttransistors 7 im Schaltnetzteil 6 sperrt und ausgangsseitig mit einem elektronischen Schalter 32 verbunden ist. Der Empfangsdecoder 28 und der elektronische Schalter 32 werden aus einem vom Schaltnetzteil 6 unabhängigen Bereitschaftsnetzteil 33 gespeist, das ebenfalls eine Gleichrichterbrücke 34 und einen Speicherkondensator 35 enthält. Die Gleichrichterbrücke 34 ist zum Beispiel über Reaktanzkondensatoren 36 und 37 an die von den Netzeingängen 1 kommenden Netzleitungen 20 angeschlossen. Der Fußpunkt 38 des Bereitschaftsnetzteils 33 ist mit dem Fußpunkt 39 des Gleichrichters 3 für das Schaltnetzteil 6 verbunden. Zur Darstellung der Wirkungsweise der Steuerung des Wartebetriebes des Videoempfängers wird davon ausgegangen, daß der Videoempfänger eingeschaltet ist.

Ein Fernbediensignal soll das Empfangsgerät in den Wartebetrieb schalten. Der Empfangsdekoder setzt den empfangenen und erkannten Befehl in ein entsprechendes Signal SpS um. Das Signal SpS gelangt an den Eingang 40 des Impulsgenerators 10, der dadurch den Schalttransistor 7 im Schaltnetzteiles 6 sperrt. Dadurch ist das Schaltnetzteil 6 stromlos und erzeugt keine Betriebsspannungen. In diesem Fall fließt kein Wechselstrom Iw über die Netzleitungen 20 und den darin angeordneten Widerstand 23. Damit fehlt die Steuerspannung für das Triac 19 und dieses unterbricht während des Wartebetriebes den Strom durch die Entmagnetesiereinrichtung 18.

Im Wartebetrieb nimmt somit der Videoempfänger nur noch soviel Leistung auf, wie der Empfangsdekoder 28 und der elektronische Schalter 32 für ihren Betrieb benötigen. Diese Leistungsaufnahme ist jedoch sehr klein gegenüber der Leistungsaufnahme, die das Empfangsgerät im Betriebszustand benötigt. Der Anteil der Verlustleistung für das Bereitschaftsnetzteils 33 ist gegenüber der bereits schon geringen Leistungsaufnahme des Empfangsdekoders 28 und des elektronischen Schalters 32 unbedeutend, da an den Reaktanzkondensatoren 36 und 37 keine Verlustleistung entsteht.

Ein Fernbediensignal, der den Videoempfänger in den Betriebszustand schaltet, bewirkt im Empfangsdekoder 28 die Abgabe eines Signal SpS. Bei diesem verbindet der elektronische Schalter 32, der während des Wartebetriebes des Empfangsgerätes geöffnet war, den Stromversorgungsausgang 41 des Bereitschaftsnetzteils 33 über eine Schaltdiode 42 mit dem Betriebsspannungsanschluß 12 des Impulsgenerators 10. Dieser beginnt mit dem Erzeugen von Impulsen.

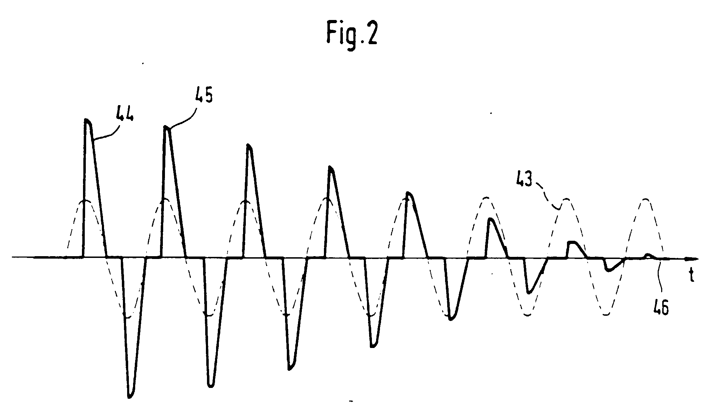

Das Schaltnetzteiles 6 läuft an und erzeugt im Spannungswert zunehmende Betriebsspannungen. Der dazu erforderliche, dem Energienetz entnommene Wechselstrom Iw in den Netzleitungen 20 erzeugt am Widerstand 23 eine Steuerspannung für den elektronischen Schalter 19 der Entmagnetisiereinrichtung 18. Diese Steuerspannung öffnet das Triac jedesmal nur während eines Teils einer Stromhalbwelle 43, wie das Diagramm der Figur 2 schematisch zeigt. Dadurch fließen durch die Entmagnetisierspulen 26 und 27 Stromimpulse 44, die die Kaltleiter 24 und 25 langsam aufheizen. Das hat zur Folge, daß die Amplituden der Stromimpulse langsam abnehmen und dadurch die Bildröhre intensiv entmagnetisieren. Am Ende 46 des Vorganges fließt nur ein geringer Reststrom durch die Entmagnetisierspulen 26 und 27.

Sobald die Betriebsspannung Ubp des Stromversorgungsteiles 11 die Betriebsspannung Ug2 des Bereitschaftsnetzteils 33 für den Empfangsdekoder 28 übersteigt, übernimmt der Stromversorgungsteil 11 die Stromversorgung des Impulsgenerators 10 und sperrt die Schaltdiode 42 für den Strom aus dem Bereitschaftsnetzteil 33.

In einer anderen erfindungsgemäßen Ausführung sperrt der Empfangsdekoder beim Empfang eines Fernbediensignals zum Umschalten des Empfangsgerätes auf den Wartebetrieb über den Impulsgenerator den Schalttransistor 7 wenigstens solange, bis die Betriebsspannungen des Schaltnetzteiles 6 zusammengebrochen sind. Beim Empfang eines Fernbediensignales zum Einschalten des Empfangsgerätes bewirkt der Empfangsdekoder über den elektronischen Schalter die Speisung des Impulsgenerators 10 aus dem Bereitschaftsnetzteil 33 solange bis das primärseitige Stromversorgungsteil 11 des Schaltnetzteiles 6 diese Funktion übernimmt.

## Patentansprüche

1. Videoempfänger mit einer Entmagnetisiereinrichtung (18) für die Bildröhre und einem Netzteil (6), die im Wartebetrieb stromlos geschaltet sind, und mit einem Empfangsdekoder (28), der von einem transformatorlosen, galvanisch mit dem Energienetz (2) verbundenen, und vom Netzteil (6) unabhängigen Bereitschaftsnetzteil (33) betriebsbereit gehalten wird, um Fernbediensignale (30), welche beim Videoempfänger ein Umschalten zwischen Betriebszustand und Wartebetrieb bewirken, zu empfangen und zu dekodieren,
**dadurch gekennzeichnet,** daß das Netzteil ein von einem Impulsgenerator (10) gesteuertes Schaltnetzteil (6) ist, bei dem der Empfangsdekoder (28) im Wartebetrieb die Steuerfunktion des Impulsgenerators (10) unterbricht und beim Empfang von Fernbediensignalen zum Einschalten des Videoempfängers andererseits einen elektronischen Schalter (32) so steuert, daß dieser den Impulsgenerator (10) kurzzeitig mit Betriebsstrom aus dem Bereitschaftsnetzteil (33) versorgt, und daß ein zweiter elektronischer Schalter (19) zum Abschalten der Entmagnetisiereinrichtung (18) vorhanden ist, der mit einer Steuerschaltung verbunden ist, die vom Eingangsstrom (Iw) des Schaltnetzteils gesteuert wird, so daß im Wartebetrieb die Entmagnetisiereinrichtung (18) stromlos geschaltet ist

2. Videoempfänger nach Anspruch 1, dadurch gekennzeichnet, daß der elektronische Schalter (19) ein Triac ist, dessen Steuerstrecke (21) parallel zu einem Widerstand (23) in die Wechselstromzuleitung (20) zum Schaltnetzteil (6) geschaltet ist.

3. Videoempfänger nach Anspruch 1, dadurch gekennzeichnet, daß das Bereitschaftsnetzteil (33) für den Empfangsdekoder (28) eine Gleichrichterschaltung ist, die einen Speicherkondensator (34) enthält, die über Reaktanzkondensatoren (36, 37) an die Netzeingänge (1) angeschlossen ist und deren Fußpunkt (38) mit dem Fußpunkt (39) des Brückengleichrichters (4) für das Schaltnetzteil (6) verbunden ist.

4. Videoempfänger nach Anspruch 1, dadurch gekennzeichnet, daß der elektronischen Schalter (32) rückstromfrei an den Betriebsspannungsanschluß (12) des Impulsgenerators (10) geschaltet ist.

## Claims

1. Video receiver having a demagnetizing device (18) for the picture tube and a power supply unit (6) which are deenergized in the standby mode, and having a reception decoder (28) which is kept in active standby mode by a transformerless active standby power supply unit (33) directly coupled to the power supply mains (2) and independent of the power supply unit (6) in order to receive and to decode remote-control signals (30) which effect a switchover between operating state and standby mode in the video receiver, characterized in that the power supply unit is a switched-mode power supply unit (6) which is controlled by a pulse generator (10) and in which the reception decoder (28) interrupts the control function of the pulse generator (10) in the standby mode and, on receiving remote-control signals for switching on the video receiver, controls, on the other hand, an electronic switch (32) in such a way that said switch supplies, for a short time, the pulse generator (10) with operating current from the active standby power supply unit (33), and in that a second electronic switch (19) is present for switching off the demagnetizing device (18), which is connected to a control circuit which is controlled by the input current (Iw) of the switched-mode power supply unit so that the demagnetizing device (18) is deenergized in the standby mode.

2. Video receiver according to Claim 1, characterized in that the electronic switch (19) is a triac, the gate section (21) of which is connected in parallel to a resistor (23) in the alternating-current supply line (20) to the switched-mode power supply unit (6).

3. Video receiver according to Claim 1, characterized in that the active standby power supply unit (33) for the reception decoder (28) is a rectifier circuit which contains a storage capacitor (35), which is connected via reactance capacitors (36, 37) to the mains inputs (1) and whose base point (38) is connected to the base point (39) of the bridge rectifier (4) for the switched-mode power supply unit (6).

4. Video receiver according to Claim 1, characterized in that the electronic switch (32) is connected without reverse current to the operating voltage connection (12) of the pulse generator (10).

## Revendications

1. Récepteur vidéo comportant un dispositif de démagnétisation (18) pour le tube image et un bloc d'alimentation (6), qui sont mis hors courant pendant le fonctionnement de veille, et comportant un décodeur en réception (28), qui est maintenu prêt à fonctionner par un bloc d'alimentation de veille (33), sans transformateur, relié par liaison galvanique avec le réseau d'alimentation en énergie (2) et indépendant du bloc d'alimentation (6), pour recevoir et décoder des signaux de télécommande (30) qui provoquent au niveau du récepteur vidéo une commutation entre l'état de fonctionnement et le fonctionnement de veille,
caractérisé en ce que le bloc d'alimentation est une alimentation à découpage (6) commandée par un générateur d'impulsions (10), que le décodeur en réception (28) interrompt pendant le fonctionnement de veille la fonction de commande du générateur d'impulsions (10) et commande d'autre part, lors de la réception de signaux de télécommande destinés à mettre en service le récepteur vidéo, un interrupteur électronique (32) de telle sorte que celui-ci alimente brièvement le générateur d'impulsions (10) avec un courant de fonctionnement provenant du bloc d'alimentation de veille (33), et qu'il existe un second interrupteur électronique (19) qui est destiné à arrêter le dispositif de démagnétisation (18) et qui est relié à un circuit de commande qui est commandé par le courant d'entrée (Iw) de l'alimentation à découpage de telle sorte que le dispositif de démagnétisation (18) est mis hors courant pendant le fonctionnement de veille.

2. Récepteur vidéo selon la revendication 1, caractérisé en ce que l'interrupteur électronique (19) est un triac dont la voie de commande (21) est branchée en parallèle avec une résistance (23) dans la ligne d'alimentation en courant alternatif (20) vers l'alimentation à découpage (6).

3. Récepteur vidéo selon la revendication 1, caractérisé en ce que le bloc d'alimentation de veille (33) destiné au décodeur en réception (28) est un circuit redresseur qui contient un condensateur de stockage (34), qui est raccordé par l'intermédiaire de condensateurs à réactance (36, 37) aux entrées de réseau (1) et dont la base (38) est reliée à la base (39) du redresseur à pont (4) destiné à l'alimentation à découpage (6).

4. Récepteur vidéo selon la revendication 1, caractérisé en ce que l'interrupteur électronique (32) est branché sans retour de courant à la borne de tension d'alimentation (12) du générateur d'impulsions (10).
